# EUROPEAN PATENT APPLICATION

(11) **EP 4 657 132 A1**
(43) Date of publication of application: **03.12.2025**
(21) Application number: 24178409.9
(22) Date of filing: 28.05.2024
(51) Int. Cl.: G02B 13/18, G02B 21/02

(54) **OPTICAL ARRANGEMENT FOR MICROSCOPE**

(71) Applicant: LensMakers Technologies Oy, 24100 Salo (FI)
(72) Inventor: Juhola, Mikko, 25130 Muurla (FI); Saarinen, Ilkka, 24280 Salo (FI); Lundin, Johan, 00150 Helsinki (FI); TENKANEN, Tuomas, 02450 Sundsberg (FI)
(74) Representative: Moosedog Oy

(57) **Abstract**

Disclosed is an optical arrangement (100, 100A, 100B, 400, 500, 600, 710, 720, 730, 810A, 810B, 820A, 820B, 1100) and an optical system (700, 800, 900). The optical arrangement comprises a first aspherical objective lens (102) configured to project an area of an object onto a projection plane (110), comprising an effective focal length (EFL) within a range of 0.5 millimeter (mm) to 50.0 mm, and an effective focal length to object diagonal ratio in a range of 5 to 0.4. The optical arrangement further comprises a second aspherical objective lens (104) configured to transfer the projected area of the object from the projection plane to an image sensor (120), comprising an effective focal length within a range of 0.5 mm to 50.0 mm, and an effective focal length to sensor diagonal ratio of within a range of 5 to 0.4, wherein an EFL ratio of the first aspherical objective lens with respect to the second aspherical objective lens is within a range of 0.1 to 10.

## Description

### TECHNICAL FIELD

The present disclosure relates to optical devices and more specifically to an optical arrangement for a microscope. Moreover, the present disclosure also relates to an optical system.

### BACKGROUND

Microscopes are optical instruments widely utilized for various purposes and magnifications depending upon different application areas such as, but not limited to, medical, life sciences, pharmaceutical industry. From the intricate world of cellular biology to the detailed analysis of industrial materials, such instruments enable exploration and understanding of the matter invisible to the naked eye unseen. With various types of microscopes available, each offering specific strengths in magnification and functionality, researchers and practitioners have a powerful toolset at their disposal. Typically, many fields such as, digital pathology, are lacking the hardware available to fulfill the current testing requirements, for example, for screening of cancer cells (such as, cervical cancer screening), hundreds of millions of tests would be required to be done annually.

Conventionally, spherical glass-based objective lenses are utilized for development of the microscopes. However, such spherical objective lenses suffer from inherent optical aberrations such as, but not limited to, spherical aberration, coma, astigmatism, and the like. Such aberrations blur the image(s) formed via such conventional spherical objective lenses and thereby limited achievable resolution and image quality. Moreover, such spherical optical lenses are commonly made from glass, thereby increasing the weight and bulkiness of the solution. Thus, a persistent challenge lies in the limitations of current high-performance digital microscopes and scanners. While such digital microscopes (and scanners) have exceptional image resolution and advanced features. However, high quality digital microscopes and microscope scanners have a high physical footprint and are expensive at the same time. Alternatively stated, such instruments are often faced with two significant drawbacks i.e., size and cost.

The complex technology required to achieve said advancements often results in bulky instruments requiring dedicated laboratory space, hindering their deployment in resource-constrained environments. Furthermore, the high costs associated with such sophisticated equipment can be prohibitive, limiting accessibility for many potential users. The current limitations in microscope technology create a bottleneck in these high-throughput workflows and therefore creates a dire need for innovative solutions that address both size and cost constraints without sacrificing image quality or resolution.

Therefore, in light of the foregoing discussion, there exists a need to overcome the aforementioned drawbacks associated with existing optical devices, arrangements, or systems and provide an improved optical arrangement for a microscope.

### SUMMARY

The present disclosure seeks to provide an optical arrangement for a microscope. The present disclosure also seeks to provide an optical system. An aim of the present disclosure is to provide a solution that overcomes at least partially the problems encountered in prior art.

In one aspect, an embodiment of the present disclosure provides an optical arrangement for a microscope, the optical arrangement comprising:
a first aspherical objective lens configured to project an area of an object onto a projection plane, comprising:
   - an effective focal length (EFL) within a range of 0.5 millimeter (mm) to 50.0 mm, and
   - an effective focal length (EFL) to object diagonal ratio in a range of 5 to 0.4; and
a second aspherical objective lens configured to transfer the projected area of the object from the projection plane to an image sensor, comprising:
   - an effective focal length within a range of 0.5 mm to 50.0 mm, and
   - an effective focal length to sensor diagonal ratio of within a range of 5 to 0.4,
wherein an EFL ratio of the first aspherical objective lens with respect to the second aspherical objective lens is within a range of 0.1 to 10.

In another aspect, an embodiment of the present disclosure provides an optical system comprising three optical arrangements, wherein the three optical arrangements are arranged in an array to simultaneously image adjacent areas of the object, and wherein each of two optical arrangements arranged on sides in the array is configured with a prism folding element positioned between the respective first and second aspherical objective lenses to redirect light paths to image sensors.

In yet another aspect, an embodiment of the present disclosure provides an optical system comprising at least four optical arrangements, wherein each of the at least four optical arrangements is arranged in a 90-degree rotation in an array to simultaneously image adjacent areas of the object, and wherein each of the optical arrangements is configured with a prism folding element positioned between the respective first and second aspherical objective lenses to redirect light paths to image sensors.

In yet another aspect, an embodiment of the present disclosure provides an optical system comprising a plurality of optical arrangements, wherein the plurality of optical arrangements comprises:
a first set of optical arrangements configured to capture image segments of a first side of the object; and
a second set of optical arrangements configured to capture image segments of a second side of the object,
the object being placed in a transparent slide to enable imaging of areas thereof from the first side as well as the second side,
wherein each of the first set and the second set of optical arrangements is configured to image an entire width of the object in the corresponding image segments from respective one of the first side and the second side.

In yet another aspect, an embodiment of the present disclosure provides an optical system comprising a plurality of optical arrangements, wherein the plurality of optical arrangements comprises:
a first set of optical arrangements comprising two or more optical arrangements and configured to capture image segments of a first side of the object; and
a second set of optical arrangements comprising a single optical arrangement and configured to capture an image of a second side of the object,
the object being placed in a transparent slide to enable imaging of areas thereof from the first side as well as the second side,
wherein the two or more optical arrangements in the first set of optical arrangements are configured to capture the image segments of the first side of the object at a first resolution, and the single optical arrangement in the second set of optical arrangements is configured to capture the image segment of the second side of the object at a second resolution, and wherein the second resolution is higher than the first resolution.

Embodiments of the present disclosure substantially eliminate or at least partially address the aforementioned problems in the prior art and provide an improved optical arrangement and optical system for a microscope.

### BRIEF DESCRIPTION OF THE DRAWINGS

The summary above, as well as the following detailed description of illustrative embodiments, is better understood when read in conjunction with the appended drawings. To illustrate the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, elements have been indicated by identical numbers.

Embodiments of the present disclosure will now be described, by way of example only, with reference to the following diagrams wherein:
- FIG. 1: is a schematic illustration of an optical arrangement for a microscope, in accordance with one or more embodiments of the present disclosure;
- FIGs. 2A (Prior Art) and 2B: are exemplary depictions of a conventional spherical glass lens system in contrast to an aspherical plastic optical arrangement, in accordance with an embodiment of the present disclosure;
- FIGs. 3A and 3B: are diagrammatic illustrations of exemplary optical arrangements, in accordance with one or more embodiments of the present disclosure;
- FIG. 4: is a diagrammatic illustration of an optical arrangement in accordance with an embodiment of the present disclosure;
- FIG. 5A: is a diagrammatic illustration of an optical arrangement employing an illumination system, in accordance with one or more embodiments of the present disclosure;
- FIG. 5B: is a diagrammatic illustration of another optical arrangement employing an illumination system, in accordance with one or more embodiments of the present disclosure;
- FIG. 6A: is a diagrammatic illustration of an optical arrangement employing an adaptive optical element for correcting optical aberrations for different autofocus ranges, in accordance with one or more embodiments of the present disclosure;
- FIGs. 6B: and 6C are diagrammatic illustrations of the optical arrangement of FIG. 6A depicting different tunable elements being employed, in accordance with one or more embodiments of the present disclosure;
- FIG. 7A: is an exemplary optical system comprising three optical arrangements, in accordance with one or more embodiments of the present disclosure;
- FIG. 7B: is an exemplary optical system comprising one optical arrangement, in accordance with one or more embodiments of the present disclosure;
- FIG. 7C: is an exemplary optical system comprising four optical arrangement, in accordance with one or more embodiments of the present disclosure
- FIG. 7D: is a perspective view of the optical system illustrated in FIG. 7C, in accordance with one or more embodiments of the present disclosure;
- FIG. 7E: is a side view of an exemplary optical system comprising nine optical arrangements, in accordance with one or more embodiments of the present disclosure;
- FIG. 7F: is a top view of the exemplary optical system illustrated in FIG. 7E, in accordance with one or more embodiments of the present disclosure;
- FIG. 8: is a dual-sided optical system employed a plurality of optical arrangements for imaging both sides of the object, in accordance with an embodiment of the present disclosure;
- FIGs. 9A: and 9B are exemplary depictions of image segments captured from an upper side and a lower side, respectively, of the object, in accordance with one or more embodiments of the present disclosure;
- FIG. 10: is a diagrammatic illustration of an optical system comprising a plurality of optical arrangements, in accordance with one or more embodiments of the present disclosure;
- FIG. 11: is an exemplary depiction of an optical arrangement, in accordance with an embodiment of the present disclosure;
- FIGs. 12A and 12B: are exemplary depictions of an original image and a magnified image, respectively, of a large area of the object captured via the optical arrangement of FIG. 11, in accordance with one or more embodiments of the present disclosure;
- FIGs. 13A and 13B: are exemplary depictions of an original image and a magnified image, respectively, of a small area of the object captured via the optical arrangement of FIG. 11, in accordance with one or more embodiments of the present disclosure;
- FIG. 14: is an exemplary illustration of the optical arrangement of FIG. 11 being employed for cervical cancer screening, in accordance with an embodiment of the present disclosure;
- FIG. 15A: is an exemplary illustration of an image projection comprising an image circle and an image sensor, in accordance with an embodiment of the present disclosure; and
- FIGs. 15B and 15C: illustrate an image sensor area inside an image circle and the image circle inside the image sensor area, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

The present disclosure provides an optical arrangement for a microscope. The optical arrangement, also referred to as an optical system, is utilized by the microscope for addressing challenges or drawbacks faced by conventional solutions, namely, achieving a larger (or wider) field of view for imaging object(s) with a large area while simultaneously maintaining a high image resolution for provision of accurate and detailed imaging via the microscope. Alternatively stated, the optical arrangement for the microscope enables imaging (observation, or examination) of larger object areas while maintaining high image resolution.

Throughout the present disclosure, the term "*optical arrangement*" as used herein refers to an arrangement of optical components (or devices) configured, either independently, or in combination with one another, to enable imaging of an object (or specimen) via a microscope. In an example, the optical arrangement comprises a stack or an array of optical lenses having a predefined physical configuration(s) including, but not limited to, size, shape, or material of the optical lenses employed to enable magnification and image formation. Alternatively stated, the optical arrangement refers to an arrangement of optical components or devices configured to modify the characteristics (such as, direction, shape, aperture, intensity, etc.) of the incident light beams for effective imaging of the target object(s) via the microscope.

Conventionally, spherical objective lenses suffer from inherent optical aberrations such as, but not limited to, spherical aberration, coma, astigmatism, and the like. Such aberrations blur the image(s) formed via such conventional spherical objective lenses and thereby limited achievable resolution and image quality. Moreover, such spherical optical lenses are commonly made from glass, thereby increasing the weight and bulkiness of the solution. Thus, in order to overcome the aforementioned drawbacks, the optical arrangement of the present disclosure employs plastic aspherical objective lenses for high performance while maintaining a low physical footprint of the optical arrangement in order to provide an accurate, compact, lightweight, and cost-effective optical arrangement for imaging of the area of the object via the microscope.

Thus, in order to overcome the aforementioned drawbacks, the optical arrangement comprises a first aspherical objective lens configured to project an area of an object onto a projection plane. The first aspherical objective lens is configured to project the nearly collimated incoming light beams emanated (or reflected) from the object onto the projection plane for enabling imaging thereof. In operation, the first aspherical objective lens is configured to be shaped in order to enable imaging (or capture) of larger area(s) of the object being observed onto the projection plane within the optical arrangement.

The first aspherical objective lens comprises an effective focal length (EFL1) within a range of 0.5 millimeter (mm) to 50.0 mm, and an effective focal length to object diagonal ratio in a range of 5 to 0.4. Specifically, the aspherical design of the first aspherical objective lens allows for achieving a shorter effective focal length relative to the object area in order to enable a wider field of view for the optical arrangement while minimizing the inherent aberrations to ensure high image resolution. The term "*object diagonal*" as used herein refers to a diagonal dimension (or size) of the object being observed via the optical arrangement. Thus, the effective focal length (EFL1) to object diagonal ratio of the first aspherical objective lens is operable to dictate the size of projected object area and also the field of view of the projected beams. Beneficially, the first aspherical objective lens provides a wider field of view in order to allow large portion(s) of the object being observed (or sampled or examined) via the optical arrangement while simultaneously reducing the physical footprint of the optical arrangement.

Throughout the present disclosure, the term "*aspherical objective lens*" as used herein refers to a specifically customized objective lens employed via the optical arrangement i.e., a combination of one or more optical lenses, configured to enable imaging of the area of the object onto the projection plane, wherein the object may be any specimen suitable for examination via a microscope for example, a cellular organism, a part of a larger organism, and the like. Herein, the aspherical objective lens is made of plastic, or a composite thereof, in order to overcome surface form limitations associated with traditional glass lenses i.e., planar or spherical surface form limitations. The plastic aspherical objective lenses employed via the optical arrangement offer highly aspherical shapes and allows for creation of anamorphic lenses that may be employed for magnification manipulation in different directions. Additionally, a wider variety of lens flange shapes are allowed via utilization of plastic (in comparison to glass), in order to improve the integration of the aspherical objective lenses of the optical arrangement. Beneficially, the plastic aspherical objective lenses provide improved image quality by minimizing image aberrations and enables reducing the physical footprint of the optical arrangement while offering design flexibility for improved customization and optimization of the optical performance of the optical arrangement. It will be appreciated that the specific plastic employed for manufacturing the aspherical objective lenses depend upon the requirements of the implementation, for example, required refracting index, thermal stability, water resistance, dispersion control, costs, availability, durability, machinability, etc., and includes, but are not limited to, Polymethyl methacrylate (PMMA), Cyclic Olefin Copolymers (COCs), Cyclic Olefin Polymers (COPs), Optical Polyesters, Optical Resins, and other typical plastic materials (such as having refractive index between 1.4 to 1.7) and having Abbe number greater than 15 and lower than 60. Also, some glass materials can be made aspherical by compression molding but with much less flexibility with optical surface shapes, with flange shapes and with dimensions.

Throughout the present disclosure, the term "*projection plane*" as used herein refers to an internal reference plane within the microscope wherein the nearly collimated beams emanated from the area of the object (being observed) may be projected. The projection plane serves as an intermediary such that the first aspherical objective lens may manipulate the incoming light rays and project the area of the object onto the projection plane, and thereby be fed as input to the second aspherical lens in order to enable image formation via the optical arrangement. It will be appreciated that the area of the object being observed via the optical arrangement may be selected based on the implementation requirements and the specific location of the projection plane relative to the first aspherical objective lens may be varied without any limitations to the present disclosure. For example, the optical arrangement may be employed for focusing on a specific area (or region) of a cell (i.e., the object) sampled under the microscope. Herein, the first aspherical objective lens is configured to project a magnified image of the specific area onto the projection plane within the microscope. Further, the projected beams from the area of the object projected onto the projection plane may be focused by another aspherical objective lens to a final image sensor for viewing or analysis of the sampled object.

In an embodiment, the first aspherical objective lens is configured to collimate light from the area of the object. Typically, the first aspherical objective lens is further configured to collimate light beam(s) emanating from different areas (or parts) of the object being observed, wherein the emanated light beams are either perfectly collimated (i.e., parallel rays), or approximately collimated (i.e., beams could be diverging or converging between -5 diopters (D) and +5 D). The emanated light beams collimated via the first aspherical objective lens simplifies the overall optical path for the second aspherical objective lens such that the combination of first aspherical objective lens and the second aspherical objective lens employed via the optical arrangement eliminates, or at least minimizes, potential aberrations like geometric distortion, color aberrations and astigmatism that may distort the image of the area of the object. There is also an optical design arrangement possible, where the objectives cannot be separated from each other's, but are working as a one combine objective where the light gradually collimated and then focused to sensor without being able to distinguish a collimated projection plane.

The optical arrangement further comprises a second aspherical objective lens configured to focus the projected area of the object from the projection plane to, or at, an image sensor. Typically, the second aspherical objective lens is configured to focus the projected beams formed on the projection plane via the first aspherical objective lens to the image sensor for enabling image formation. Alternatively stated the collimated field of views are focused via the second aspherical objective lens at the image sensor for enabling image formation thereat. However, it will be appreciated that the second aspherical objective lens may also be utilized to alter or magnify the projected area of the object projection plane being focused onto the image sensor based on the implementational requirements. Notably, the effective focal length and aperture sizes of the first aspherical objective lens and the second aspherical objective lens is modified for precise control over image formation of the area of the object onto the projection plane and to achieve a higher numerical aperture (NA) for improved image resolution and light collection via the optical arrangement.

The second aspherical objective lens comprises an effective focal length (EFL2) within a range of 0.5 mm to 50.0 mm, and an effective focal length to sensor diagonal ratio of within a range of 5 to 0.4. The effective focal length (EFL2) to sensor diagonal ratio of the second aspherical objective lens is operable to dictate the field of view from the projected beams that can be focused inside the image sensor area. Further, wherein, an EFL ratio of the first aspherical objective lens with respect to the second aspherical objective lens is within a range of 0.1 to 10. Typically, the EFL ratio of the first aspherical objective lens with respect to the second aspherical objective lens dictates the magnification capability of the optical arrangement. The ratio between the effective focal lengths (EFL) of the two objective lenses (EFL1 and EFL2) determines the balance between achieving high resolution for capturing fine details and capturing a larger object area for a broader sample overview. In an exemplary scenario, when EFL1 is significantly larger than EFL2 (e.g., EFL1/EFL2 = 3), the resolution at the object level suffers. Imagine a pixel size of 1 micrometer (µm). In this scenario, the object-level sampling would become 3 µm, meaning the microscope wouldn't be able to distinguish details smaller than 3 µm unless methods like super-resolution and multiframe captures are used, where the information from multiple captured images can increase the sampling of the object and increase resolution.

While this reduces resolution, it has a positive impact on the captured area. In another exemplary scenario, a higher EFL1/EFL2 ratio translates to lower magnification. As a result, the microscope captures a larger diameter area of the object relative to the sensor size. In the example above (EFL1/EFL2 = 3), the captured object diameter would be 3 times larger than the sensor diameter, allowing users to see a broader portion of the object in a single image. The optimal EFL1/EFL2 ratio depends on the specific application. If a comprehensive view of a larger sample area is required, a higher ratio (prioritizing a larger field of view) is preferred. However, if capturing intricate details on a smaller area is crucial, a lower ratio (prioritizing resolution) would be preferred. In an example, when the ratio of the EFL1 to object area diagonal is 0.8, then then the entirety of the projected beams from first aspherical objective lens can be formed by the second aspherical lens objective completely onto the image sensor area as long as the aperture of the second aspherical objective lens can input all beams from the projection plane.

In another example, if the ratio of the EFL1 to object area diagonal is 0.8 and if the ratio of EFL2 to sensor diagonal is larger than 0.8, e.g., 0.9, then some part(s) of the projected beams from the first aspherical objective lens would not be formed by the second aspherical lens objective completely onto the image sensor area and the object area would be cropped to a narrower screen from the object area that first aspherical objective lens can project. In yet another example, if the ratio of the EFL1 to object area diagonal is 0.8 and if the ratio of EFL2 to sensor diagonal is smaller than 0.8, e.g., 0.6, then field of view of the second aspherical objective lens would be wider than field of view of the first aspherical objective lens beams and image formed at the image sensor may not contain any projected beams and/or the image would contain a round area of projected area from object surrounded by black area without information in the image formed.

In yet another example, a smaller ratio of EFL to sensor diagonal or object diagonal will mean that one can make more compact optical system(s) relative to the object and sensor size. (for example, 0.4). Such an implementation enables imaging of large object areas. In another example, a larger ratio of EFL to sensor or object diagonal (for example, 5) provides a narrower field of view to enable effective capturing of smaller areas of the object being examined via the optical arrangement. Such an implementation increases the total track length of the optical arrangement. It will be appreciated that the available sensor pixel pitch, sensor size, and EFL ratios of the first aspherical objective lens and the second aspherical objective lens will determine the object sampling area and magnification and may be varied without any limitations to the present disclosure. Notably, the specified EFL to object diagonal ratio of the first aspherical objective lens and the EFL to sensor diagonal of the second aspherical objective lens ensures a balance between capturing a suitable field of view and achieving the desired magnification for detailed analysis. Specifically, the EFL to object diagonal ratio (i.e., object area size) of the first aspherical objective lens indicates the field of view, wherein the same field of view is usually correspondingly configured for the second aspherical objective lens. Moreover, via utilization of the two aspherical objective lenses within the EFL to sensor diagonal ratio constraint, the optical arrangement provides high-quality image capture via the microscope without collimated beam clipping meaning image not dark areas around circular field of view drawn by lens.

Throughout the present disclosure, the term "*effective focal length*" refers to an optical parameter configured to define the focusing power of each of the first and the second aspherical objective lens employed via the optical arrangement separately. The EFL is inversely proportional to the focusing power (or magnification capability) and inversely proportional to the angle associated with the field of view. Alternatively stated, a higher EFL i.e., a longer effective focal length of the first (or second) aspherical objective lens provides a narrower field of view and whereas, a lower EFL i.e., a shorter effective focal length of the first (or second) aspherical objective lens provides a stronger focusing power and/or magnification capability. However, each alternative i.e., the higher EFL and the lower EFL, has inherent limitations associated therewith, namely, the higher EFL translates to a weaker focusing power and a lower EFL translates to a wider field of view. Thus, in order to leverage the benefits of each alternative, the optical arrangement of the present disclosure employs each of the first aspherical objective lens and the second aspherical objective lens in a range of 0.1 to 10 of EFL1/EFL2 ratio to provide enhanced flexibility and/or versatility to achieve different levels of magnifications of the area(s) of the object(s) with variable field of views.

In an exemplary scenario, the first aspherical objective lens has a higher EFL, for example, 10mm, and the second aspherical objective lens has a lower EFL, for example, 2mm. Now assuming ratio of EFL to sensor or object diagonal will be identical for the first aspherical lens objective and the second aspherical lens objective, thus the ratio of '5' between object area diagonal and sensor diagonal, such that the diagonal of the object area is 5 times larger than the sensor diagonal. And the sampling interval at the object side is in this case 5 times larger than the pixel pitch (or adjacent pixel center point interval).

Throughout the present disclosure, the term "*image sensor*" as used herein refers to a type of sensor configured to convert light signals into electronic signals to enable capturing of magnified image(s) of the object, or the area thereof, formed onto the projection plane via the optical arrangement. Alternatively stated, the image sensor refers to a component capable of detecting and measuring an intensity of light incident thereupon. The image sensor may utilize photosensitive materials to produce an electrical signal proportional to the intensity of light beams received. Typically, when the light focused via the first and second aspherical objective lenses falls on the surface of the image sensor, each pixel (or picture element) within the image sensor captures the intensity of the incident light, thereby creating a two-dimensional grid of light information. The incident light coming to sensor could be filtered before coming to the sensor with spectral filters like band-pass, low-pass or high-pass optical filters to modify the spectrums at which object is captured, for example looking at visible spectrum. Correspondingly, the image sensor converts the created light information into electronic signals for further processing and display in the microscope. In an embodiment, the image sensor is a digital sensor configured to convert the image into an electronic signal for display in the microscope. For example, the image sensor may be selected from at least one of a photodiode sensor, photoresistor sensor, silicon carbide sensor, a fluorescent sensor, a phototransistor sensor, a charge-coupled device (CCD), an electron multiplying CCD (EMCCD), an ambient light sensor (also known as, a lux meter or illuminance sensor), a photodiode sensor, a silicon photomultiplier (SiPM) sensor, a complementary metal-oxide semiconductor (CMOS) image sensor, or a scientific CMOS (sCMOS), and so forth.

In the optical arrangement, the image sensor is positioned in the optical arrangement so as to accurately capture the image of the area of the object. In an implementational scenario, wherein the image sensor is a CMOS image sensor employed to capture an image of a specific cell relayed via the second aspherical objective lens such that the detected light information from the specific cell is converted into the (digital) image for further viewing and/or analysis.

In operation, the optical arrangement utilizes the first aspherical objective lens to prepare the light rays via collimation, while the second aspherical objective lens it utilized to prepare sharp and focused images on the image sensor. Such an implementation of the two aspherical objective lens i.e., the first and the second aspherical objective lens, enables the optical arrangement to obtain high-resolution images of the area of the object across a large field-of-view.

In an embodiment, the second aspherical objective lens is configured to focus collimated light onto the image sensor. Typically, the second aspherical objective lens is further configured to focus the collimated light from the first aspherical objective lens onto the image sensor i.e., converges and focuses the collimated light (rays) to obtain sharp high-resolution images on the image sensor. Alternatively stated, the second aspherical objective lens precisely focuses the collimated light to ensure an accurate and detailed capturing of the area of the object being observed to achieve high image resolution via the optical arrangement.

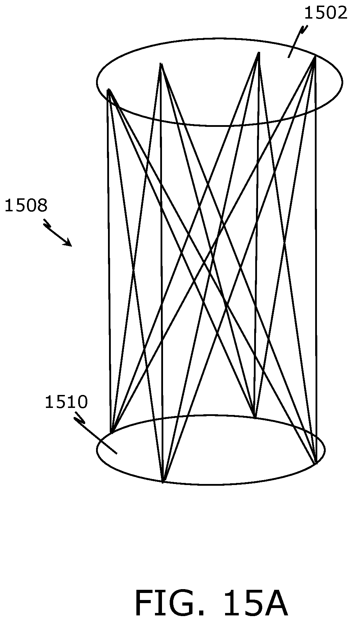

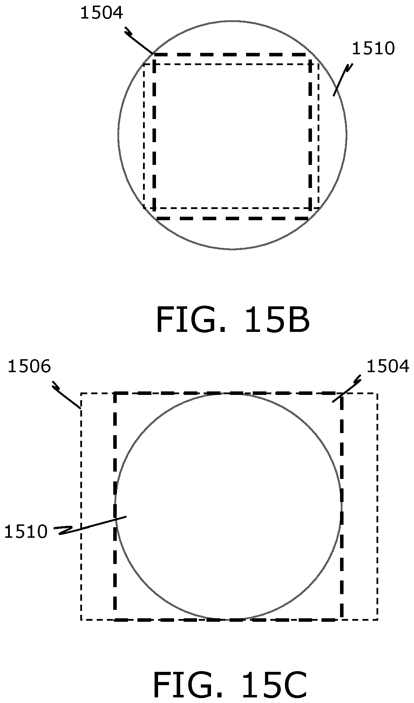

FIG. 15A is an exemplary illustration of an image projection comprising an image circle and an image sensor, in accordance with an embodiment of the present disclosure. FIGs. 15B and 15C illustrate an image sensor area inside an image circle and the image circle inside the image sensor area, in accordance with an embodiment of the present disclosure.

An image circle for rotationally symmetric objective lens is a round circle that includes an image from an object. There are many ways to fit image sensor to that. The typical image sensor aspect ratios are rectangular 4:3 and 16:9, but the aspect ratio may be also square. The usual way of placing the image sensor area 1504, 1506 inside the image circle 1510 created by the lens 1502 is that the beam vertices 1508 are at the circle (see FIG. 15A). Although also sometimes depending on the application the image circle 1510 can be placed also inside the image sensor rectangle 1504 so that there are outside of the image circle black area (see FIGs. 15B and 15C). The sensor aspect ratio can impact how to capture maximum object size with an optical arrangement, such as an array microscope arrangement.

In one or more embodiments, the optical arrangement further comprises an autofocus mechanism configured to adjust a focus of the optical arrangement, having an autofocus range, based on a position of the area of the object relative to the projection plane. The term "*autofocus mechanism*" as used herein refers to an arrangement of at least one of mechanical, electronic, software, and firmware components configured to automatically adjust the focus of the optical arrangement within the autofocus range (or distance) based on the position of the area of the object being observed in relation to the projection plane. The autofocus mechanism eliminates the need for manual intervention for re-focusing of the optical arrangement and thereby makes the optical arrangement faster for implementation, especially for large field-of-view applications.

Further, the term "*autofocus range*" as used herein refers to a predefined range of distances within which the autofocus mechanism of the optical arrangement is effectively operable to adjust the focus thereof in order to obtain clear, focused, and/or detailed image(s) of the area of the object being examined. In an example, the autofocus movement range at focal plane (on sensor plane) can be 50 µm. In another example, the autofocus range is 200 µm. In yet another example, the autofocus range can be 2.0 mm. It will be appreciated that the autofocus range of the autofocus mechanism may be varied to enable the optical arrangement to handle examination of different types, shapes, and sizes of the object, or area thereof, without any limitations to the present disclosure.

Optionally, the autofocus mechanism of the optical arrangement may comprise one or more sensors configured to determine the position or distance of the area (of interest) on the object being observed relative to the projection plane within the microscope. The autofocus mechanism is further configured to utilize the position of the area of the object relative to the projection plane, determined via the one or more sensors, in order to automatically adjust the EFL of the optical arrangement. Beneficially, such an implementation of the autofocus mechanism ensures sharp and focused imaging via the optical arrangement, such as, across whole field of view(s). Alternatively stated, the implementation of the autofocus mechanism allows for a large field of view and high image resolution of the optical arrangement within the microscope, thereby further enhancing the usability and image quality obtained via the optical arrangement.

In another embodiment, the autofocus mechanism comprises a voice coil motor for moving at least one of the first aspherical objective lens and the second aspherical objective lens, for focusing adjustments. The term "*voice coil motor*" as used herein refers to a type of linear actuator configured to physically displace at least one of the first and/or second aspherical objective lens of the optical arrangement. Typically, the autofocus mechanism of the optical arrangement utilizes the voice coil motor (VCM) to physically move each of the first aspherical objective lens and/or the second aspherical objective lens i.e., for either lateral movement or rotational movement, in order to enable quick and precise focus adjustment(s) of the optical arrangement within the microscope. In operation, the autofocus mechanism employs the voice coil motor to precisely control the movement of the selected (first or second) aspherical objective lens to adjust the focus of the optical arrangement. In an example, the autofocus mechanism employs the VCM to move the first aspherical objective lens either towards, or away from, the object being observed via the optical arrangement based on the determined position of the area of the object relative to the projection plane. Additionally, optionally, the autofocus mechanism employs a combination of the VCM along with a piezoelectric element to achieve a larger overall focusing range. For example, the optical arrangement employs a coarse adjustment with the VCM and thereby fine-tune the focus of the optical via the piezoelectric element (or actuator).

In another embodiment, the autofocus mechanism comprises an optical element with adaptive optical element positioned between the first aspherical objective lens and the second aspherical objective lens, for focusing adjustments. The term "adaptive *optical element*" as used herein refers to specific type of optical lens (or component) configured for dynamic variation of the thickness thereof changing the surface curvature or refractive power. The adaptive optical element is positioned between the first aspherical objective lens and the second aspherical objective lens and operable to act as a dynamically tunable lens i.e., the optical properties of the optical element can be varied via adjustment surface curvature or refractive power. The optical element alters the behavior of the incoming light rays with positive or negative refraction power (from the first aspherical objective lens) passing therethrough to enable effective adjustment of the effective focal length associated with the optical arrangement. It will be appreciated that different mechanisms for adaptive optical element may be employed via the optical arrangement depending upon the specific design or implementational requirements and include, but are not limited to, electroactive polymers, optical membranes with actuation mechanisms, liquid lenses, liquid crystal lenses, and the like. Beneficially, the autofocus mechanism of the optical arrangement enables effective focal adjustments in a simpler, compact, and efficient manner via utilization of the adaptive optical element.

In another embodiment, the optical arrangement further comprises a variable optical path (thickness) element positioned between the first aspherical objective lens and object and/or between the second aspherical objective lens and sensor to change optical path length for focusing adjustments, for different focus distances, wherein the variable optical path element comprises a tunable element for adjusting the optical path length based on requirements. The term "*variable optical path element*" as used herein refers to a dynamic (or adaptive) optical component of the optical arrangement configured to actively change optical path length by changing the thickness of element or changing the index of the element material. The placement of the adaptive optical element between the first aspherical objective lens and object or between the second aspherical objective lens and sensor, allows the varying optical path element to influence the entire light path before reaching the image sensor and thereby allowing the optical arrangement to effectively the focus of the autofocus mechanism.

In another embodiment, the optical arrangement further comprises a variable thickness optical element positioned between the first aspherical objective lens and the second aspherical objective lens, and/or between the first aspherical objective lens and the object, and/or between the second aspherical objective lens and the object, to correct optical aberrations for different autofocus ranges, wherein the optical element is configured for adjusting a focal length based on imaging requirements. The term "*variable thickness optical element*" as used herein refers to a dynamic (or adaptive) optical component of the optical arrangement configured to actively correct aberrations (if any) in a given light path. The placement of the varying optical path element positioned between the first aspherical objective lens and the second aspherical objective lens and/or between the first aspherical objective lens and object and/or between the second aspherical objective lens and object to, allows the varying optical path element to influence the entire light path before reaching the image sensor and thereby allowing the optical arrangement to effectively address the potential optical aberrations and especially field curvature introduced across the autofocus range of the autofocus mechanism. Specifically, the adaptive optical element comprises the tunable element configured to adjust the focal length based on imaging requirements, wherein the imaging requirements may include, but is not limited to, a required image resolution, a required magnification factor, object area requirements, and the like. The term "*tunable element*" as used herein refers to an optical component of the adaptive optical element configured to dynamically adjust properties thereof in order to enable effective correction of the potential optical aberrations. In operation, the tunable element acts as a dynamic lens within the adaptive optical element that can modify its optical characteristics (for example, focal length or phase profile) based on the imaging requirements. For example, the tunable element may be at least one of, but not limited to, a deformable mirror, a liquid crystal element (LCE), a microelectromechanical system (MEMS) mirror, an acousto-optic device, and the like. It will be appreciated that the specific type of the tunable element employed within the adaptive optical element is dependent upon at least one of a desired correction range, response time, complexity and associated costs. Beneficially, the tunable element enables the adaptive optical element to dynamically correct (or address) potential optical aberrations in order to ensure accurate, high-quality images to be generated via the optical arrangement.

In one or more embodiments, the optical arrangement further comprises an illumination system configured to provide light to the area of the object through at least one of Köhler illumination, critical illumination, or side illumination techniques. The term "*illumination system*" as used herein refers to a system comprising multiple components configured for directing light to the area of the object being observed via the microscope. For example, the illumination system comprises at least one of a light source (such as, a light emitting diode (LED)), a field diaphragm, a collector lens, a mirror, a diffuser, and the like. The illumination system is configured to direct (or provide) a controlled beam of light towards the area of the object under observation in order to provide optimal brightness for clear visualization of the object features within the area and to ensure even illumination across the field of view to avoid shadows or obscured areas while simultaneously minimizing glare and artifacts. Such an implementation of the illumination system along with the optical arrangement enables the microscope to extract detailed information from a wider range of objects (or samples) and improve image quality.

Specifically, the illumination system is configured to provide light to the area of the object via at least one of Köhler illumination, critical illumination, or side illumination techniques. It will be appreciated that the specific implementation of the illumination system may vary based on the imaging requirements and may include, but is not limited to, switchable light sources, adjustable apertures, or integrated diffusers to achieve the desired illumination characteristics for optimal imaging via the microscope. In an exemplary scenario, wherein the illumination system is configured to provide light to the area of the object through the Köhler illumination technique, a collimated light beam from a light source is passed through a condenser lens (first and/or second aspherical objective lens) and thereby adjusted via a field diaphragm or an aperture diaphragm to provide a bright and even light distribution across the entire area of the object (or the field of view) in order to enable provision of high-quality images with enhanced clarity and image resolution.

In an embodiment, the illumination system comprises a beamsplitter for directing light through the second aspherical objective lens to the area of the object. The term "*beamsplitter*" as used herein refers to an optical component of the illumination system configured to split a light beam into two or more light beams (or paths). For example, the beamsplitter may be at least one of a plate beamsplitter, a cube beamsplitter, a dichroic beamsplitter, a pellicle beamsplitter, a polarizing beamsplitter (PBS), and the like. Illumination systems may include spectral transmission filters like band-pass, high-pass or low-pass filters to modify illumination spectrum. Typically, the beamsplitter may be positioned within the illumination system and configured to direct the light via at least one of Köhler illumination, critical illumination, or side illumination techniques through the second spherical objective lens to the area of the object being sampled. In an exemplary scenario, the beamsplitter splits the light beam (from a light source) into at least two light paths, wherein a first light path goes towards the eyepiece(s) of the microscope for observation, while the other light path is directed towards the second aspherical objective lens to focus the light beam onto the object being sampled.

The present disclosure also provides an optical system. The various embodiments and variants disclosed above apply *mutatis mutandis* to the present optical system without any limitations.

In another aspect, the present disclosure provides an optical system comprising three optical arrangements of the first aspect, wherein the three optical arrangements are arranged in an array to simultaneously image adjacent areas of the object, and wherein each of two optical arrangements arranged on sides in the array is configured with a prism folding element positioned between the respective first and second aspherical objective lenses to redirect light paths.

The optical system utilizes the multi-objective array with prism folding elements to capture wider field-of-view images while maintaining the physical footprint thereof. Conventionally, employing three separate microscopes leads to a collision between internal elements of the optical system including at least one of a sensor side i.e., the side of the microscope where the image sensor is located, a printed wiring board (PWB), and sensor packaging i.e., housing of the image sensor. Thus, in order to overcome the aforementioned drawback, the optical system of the present disclosure provides the multi-objective array with prism folding elements to allow a compact overall design and prevent collision between the internal components of the optical system.

Specifically, the optical system utilizes three (or more) optical arrangements placed side-by-side in an array to simultaneously image adjacent areas of the object being observed without requiring additional scanning, wherein the two side optical arrangements incorporate the prism folding element to redirect the light path of the incident light ray(s).

Herein, by folding or redirecting the light path via the prism folding elements, the first and the second aspherical objective lenses of the three optical arrangements may be positioned closer together in order to reduce the physical footprint of the optical system. The prism folding elements are positioned between the first and second aspherical objective lenses in the side-mounted optical arrangements of the optical arrangement such that the light path within the first and second aspherical objective lenses is folded, thereby allowing the two aspherical objective lenses of each of the three optical arrangements to fit within the limited space offered via the optical system. Notably, each of the three optical arrangements of the optical system are precisely aligned to ensure consistent magnification and minimal distortion across the entire field-of-view. Beneficially, such an implementation of the optical system enables capturing of images of adjacent areas of the object simultaneously, thereby providing a larger field of view in comparison to single objective optical systems.

In another aspect, an embodiment of the present disclosure provides an optical system comprising at least four optical arrangements of the first aspect, wherein each of the at least four optical arrangements is arranged in a 90-degree rotation in an array to simultaneously image adjacent areas of the object, and wherein each of the at least four optical arrangements is configured with a prism folding element positioned between the respective first and second aspherical objective lenses to redirect light paths. This enables a microscope camera wherein each of the four optical arrangements are configured with a prism folding element and arranged so that all four image sensors are folded in different directions (relative to each other). This will fit better in constellation where the image sensor side of a microscope camera is larger than the object area and one could not but the object areas to overlap because of that.

The present disclosure also provides another optical system. The various embodiments and variants disclosed above apply *mutatis mutandis* to the present optical system without any limitations.

In yet another aspect, the optical system comprises a plurality of optical arrangements (similar to the optical arrangement of the first aspect), wherein the plurality of optical arrangements comprises a first set of optical arrangements configured to capture image segments of a first side of the object and a second set of optical arrangements configured to capture image segments of a second side of the object, the object being placed in a transparent slide to enable imaging of areas thereof from the first side as well as the second side, wherein each of the first set and the second set of optical arrangements is configured to image an entire width of the object in the corresponding image segments from respective one of the first side and the second side. The size and shape of the transparent slide may be varied based on the implementation and may be, for example, a rectangular glass side with dimensions of 25mm x 75mm. Specifically, the first set of optical arrangements of the plurality of optical arrangements are configured to capture image segments of the first side of the object and the second set of optical arrangements of the plurality of optical arrangements are configured to capture image segments of the second side of the object. In operation, the object to be examined is placed in the transparent slide to enable illumination and capturing of area(s) thereof from each of the first side and the second side of the object. Herein, each of the first set and the second set of optical arrangements of the plurality of optical arrangements are configured to image the entire width of the object in the corresponding image segments from each of the respective first side and the second side. Such an implementation of the optical system significantly improves the efficiency thereof by capturing images of both sides of the object simultaneously while eliminating the need of physical manipulation, thereby minimizing potential damage and handling time of the optical system. Moreover, capturing of the entire width of the object ensures complete and accurate imaging of the object, or areas thereof, in an efficient manner. In an example, the optical system may be utilized for analyzing thin tissue samples mounted on transparent glass slides. In another example, the optical system may be utilized for inspecting internal channels and features within transparent microfluidic chips.

In one or more embodiments, the optical system further comprises a processor configured to stitch, and optionally overlay, the segmented images to form a complete image of the object. Typically, the optical system captures images of the object from both sides using two sets of optical arrangements i.e., the first set and the second set of optical arrangements of the plurality of optical arrangements, wherein the captured images of each side of the object represent segments of the entire object being observed via the optical system. Herein, the processor is configured to employ one or more image processing algorithms (or techniques) to seamlessly stitch (or combine) the captured segments together into a singular complete image of the object in order to ensure that the features and details of each side of the object are aligned and displayed accurately via the complete image of the object. Alternatively stated, the optical system is further configured to implement one or more post-processing imaging techniques (such as, image stitching) to seamlessly combine images formed in each of the three optical arrangements of the optical system into a singular high-resolution image of the area of the object being observed. Additionally, optionally, the processor is further configured to overlay the segmented images to display information from each side of the object via the complete image. For example, the processor may overlay a color-coded image representing features from one side of an object onto a grayscale image of the other side, in order to provide a comprehensive complete image of the object. Beneficially, incorporating the processor for image stitching and overlay significantly enhances the functionality of the optical system and allows efficient capturing and combination of images from both sides of the object, thereby creating a complete and informative representation for further analysis.

The term "*processor*" as used herein refers to a structure and/or module that includes programmable and/or non-programmable components configured to store, process and/or share information, data, instructions and/or signals to stitch and optionally overlay, the segmented images to form the complete image of the object being observed. Optionally, the processor includes any arrangement of physical or virtual computational entities capable of enhancing information to perform various computational tasks. Further, it will be appreciated that the processor may be implemented as a hardware processor and/or plurality of hardware processors operating in a parallel or in a distributed architecture. Optionally, the processor includes, but is not limited to, a microprocessor, a micro-controller, a complex instruction set computing (CISC) microprocessor, a reduced instruction set (RISC) microprocessor, a very long instruction word (VLIW) microprocessor, Field Programmable Gate Array (FPGA), advanced RISC Machine (ARM) processor, Decoupled Access-Execute (DAE) Processor, or any other type of processing circuit, for example as aforementioned. In the present examples, the processor may include components such as memory, processor(s), a network adapter, and the like, to store, process and/or share information with other computing components, such as, a user interface, a user device, a remote server unit, a database arrangement, and the like. Optionally, the processor is supplemented with additional computation system, such as neural networks, and hierarchical clusters of pseudo-analog variable state machines implementing artificial intelligence algorithms. Optionally, the processor is implemented as a computer program that provides various services (such as database service) to other devices, modules, or apparatus. The processor may be arranged in various architectures for responding to and processing the instructions for any intended operation.

The present disclosure also provides yet another optical system. The various embodiments and variants disclosed above apply *mutatis mutandis* to the present optical system without any limitations.

In yet another aspect, the optical system comprises a plurality of optical arrangements of the first aspect, wherein the plurality of optical arrangements comprises a first set of optical arrangements comprising two or more optical arrangements and configured to capture image segments of a first side of the object and a second set of optical arrangements comprising a single optical arrangement and configured to capture an image of a second side of the object, the object being placed in a transparent slide to enable imaging of areas thereof from the first side as well as the second side, wherein the two or more optical arrangements in the first set of optical arrangements are configured to capture the image segments of the first side of the object at a first resolution, and the single optical arrangement in the second set of optical arrangements is configured to capture the image segment of the second side of the object at a second resolution, and wherein the second resolution is higher than the first resolution. Herein, the optical system utilizes the plurality of optical arrangements in two distinct sets i.e., the first set of optical arrangements including two or more optical arrangements configured to capture image segments of the first side of the object, and the second set of optical arrangements including a single optical arrangement configured to capture an entire image of the second side of the object. Notably, the resolution of the first set of optical arrangements and the second set of optical arrangements is different from one another such that the first set of optical arrangements have a lower first resolution for capturing overall features or context of the first side of the object and the second set of optical arrangement have a higher second resolution for capturing finer details on the second side of the object being observed. Beneficially, by employing multiple optical arrangements in the first set of optical arrangements, the optical system achieves a higher resolution for accurately capturing fine details of the first side of the object. In contrast, by employing a single optical arrangement in the second set of optical arrangements, the optical system enables capturing of the complete image on the second side of the object to offer context for the high-resolution details captured via the first set of optical arrangements of the plurality of optical arrangements.

In another embodiment, the optical system further comprises a processor configured to receive the captured image segments of the first side of the object at the first resolution, from the first set of optical arrangements, identify one or more regions of interests in the captured image segments of the first side of the object, and configure the single optical arrangement in the second set of optical arrangements to capture images of the one or more regions of interests (ROIs) from the second side of the object at the second resolution. Typically, the processor is configured to receive the image segments captured via the first set of optical arrangements of the first side of the object at the first resolution and thereby identify one or more regions (or areas) of interests in the captured image segments of the first side of the object by performing imaging analysis thereon. Further, based on the identified regions of interest, the processor is further operable to dynamically configure (or adjust) the single optical arrangement of the second set of optical arrangements to capture high-resolution images of the one or more regions of interests from the second side of the object. Alternatively stated, the processor analyzes the captured data (image segments) from the first side of the object and thereby identifies specific areas of interest to leverage the high-resolution capability of the second set of optical arrangements (single objective) to focus on capturing critical details only from the identified ROIs on the second side of the object. Such an implementation of the processor enables the optical system to avoid capturing of unnecessary high-resolution images of the entire second side of the object and thereby improving the effectiveness and efficiency of the optical system.

The present disclosure also provides a method for manufacturing an optical arrangement. The various embodiments and variants disclosed above apply *mutatis mutandis* to the present method without any limitations.

In yet another aspect, the present disclosure provides a method of manufacturing an aspherical objective lens employed in an optical arrangement. The method comprises analyzing a physical configuration of an objective lens. The method further comprises determining a machining configuration based on the analyzed physical configuration of the objective lens. The method further comprises selecting a machining tool based on the determined machining configuration. Optionally, the method further comprises designing a fixture based on at least one of the physical configurations of the objective lens, or the machining configuration. The method further comprises determining a machining plan including at least an order of machining of each surface of the objective lens. The method further comprises executing the machining operation based on the determined machining plan, the machining configuration, and the physical configuration of the objective lens, in order to manufacture an aspherical objective lens employed in the optical arrangement.

In yet another aspect, the present disclosure provides another method of manufacturing an aspherical objective lens employed in an optical arrangement. The method comprises selecting a material for the aspherical objective lens and melting the material to form a molten blend. The method further comprises defining a profile of the aspherical objective lens in order to form a mold thereof. The method further comprises injecting the molten blend into the mold having the defined profile to form a solidified blend. The method further comprises processing the solidified blend based on the defined profile to manufacture the aspherical objective lens employed in the optical arrangement.

Modifications to embodiments of the present disclosure described in the foregoing are possible without departing from the scope of the present disclosure as defined by the accompanying claims. Expressions such as "including", "comprising", "incorporating", "have", and "is" used to describe, and claim the present disclosure are intended to be construed in a non-exclusive manner, namely allowing for items, components, or elements not explicitly described also to be present. Reference to the singular is also to be construed to relate to the plural. The word "exemplary" is used herein to mean "serving as an example, instance, or illustration". Any embodiment described as "exemplary" is not necessarily to be construed as preferred or advantageous over other embodiments or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the invention, which are, for brevity, described in the context of a single embodiment, may also be provided separately or in any suitable combination or as suitable in any other described embodiment of the disclosure.

### DETAILED DESCRIPTION OF THE DRAWINGS

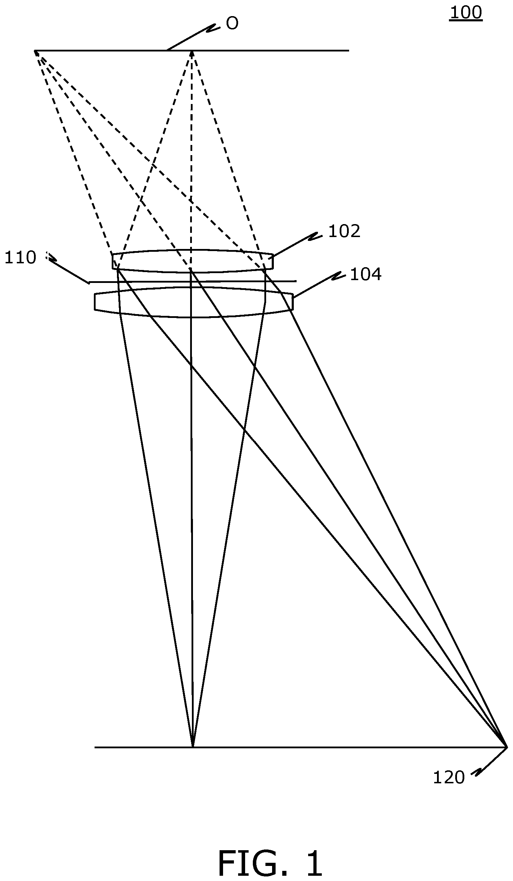

Referring to FIG. 1, depicted is a schematic illustration of an optical arrangement 100 for a microscope (not shown), in accordance with one or more embodiments of the present disclosure. As shown, the optical arrangement 100 comprises a first aspherical objective lens 102 configured to project an area of an object 'O' onto a projection plane 110 to enable image formation at an image sensor 120. The first aspherical objective lens 102 comprises an effective focal length (EFL) within a range of 0.5 millimeter (mm) to 50.0 mm, and an effective focal length (EFL) to object diagonal ratio in a range of 5 to 0.4. The optical arrangement 100 further comprises a second aspherical objective lens 104 configured to focus the projected area of the object from the projection plane 110 to the image sensor 120. The second aspherical objective lens comprises an effective focal length (EFL) within a range of 0.5 mm to 50.0 mm, and an effective focal length (EFL) to sensor diagonal ratio of within a range of 5 to 0.4. Herein, an EFL ratio of the first aspherical objective lens with respect to the second aspherical objective lens is within a range of 0.1 to 10.

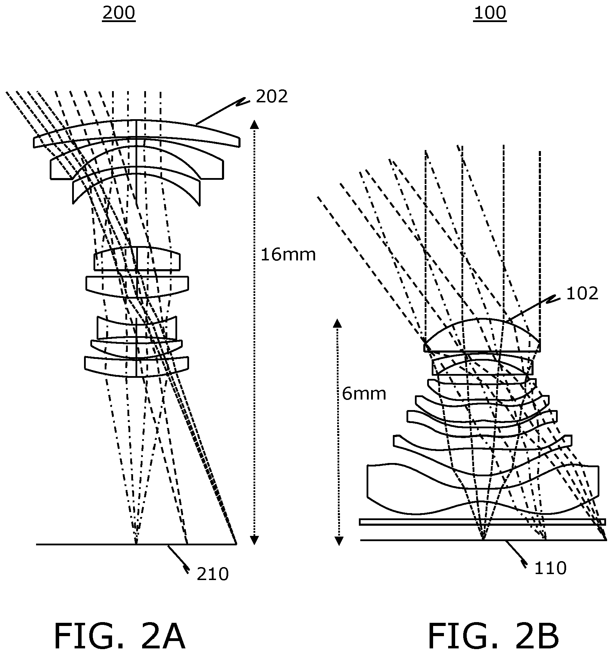

Referring to FIGs. 2A (Prior Art) and 2B, illustrated are exemplary depictions of a conventional spherical glass lens system 200 in contrast to the optical arrangement 100, in accordance with an embodiment of the present disclosure. Herein, the spherical lens system 200 is made of glass and the aspherical optical arrangement 100 is made of a plastic, composite thereof. As shown, multiple spherical glass lenses are arranged to form the conventional spherical glass lens system 200 which occupies a total distance of 16mm from a first spherical glass lens 202 to the image plane 210; whereas multiple aspherical objective lenses 102 (or 104) are arranged closer to one another to form the optical arrangement 100 which occupies a total distance of 6mm from the first aspherical objective lens 102 to the image plane 110. Thus, a reduction of a distance of 10mm is achieved by the optical arrangement 100 in contrast to the conventional spherical glass system 200 and thereby makes the optical arrangement 100 system more compact, cheap, and efficient.

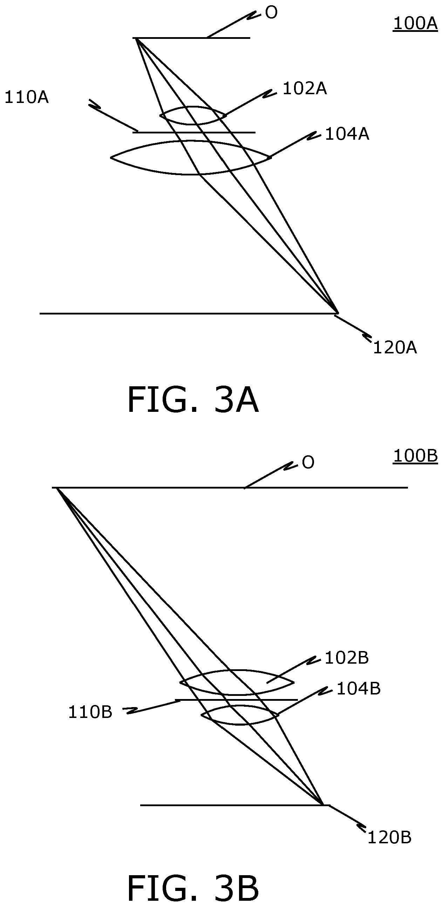

Referring to FIGs. 3A and 3B, depicted are diagrammatic illustrations of exemplary optical arrangements 100A, 100B, in accordance with one or more embodiments of the present disclosure. Herein, FIG. 3A is representative of a first optical arrangement 100A having a higher resolution and FIG. 3B is representative of a second optical arrangement 100B having a lower resolution. Such an implementation of the optical arrangements 100A and 100B enables modification depending upon the imaging requirements such as, required image resolution, object area requirements, and the like.

Referring to FIG. 3A, depicted is a diagrammatic illustration of the first optical arrangement 100A, in accordance with an embodiment of the present disclosure. As shown, the first optical arrangement 100A comprises a first aspherical objective lens 102A having an EFL of 3 mm and a second aspherical objective lens 104A having an EFL of 6mm. The first optical arrangement 100A is configured to image an area of the object 'O' having a size (or diameter) of 4.15 mm onto a first projection plane 110A and thereby relayed to a first image sensor 120A having a size (or diameter) of 8.3 mm. Notably, the pixel size of the first image sensor 120A is 0.56 µm and the object sampling size is very high i.e., 0.28 µm, owing to the smaller EFL of the first aspherical objective lens 102A in comparison to the second aspherical objective lens 104A.

Referring to FIG. 3B, depicted is a diagrammatic illustration of the second optical arrangement 100B, in accordance with another embodiment of the present disclosure. As shown, the second optical arrangement 100B comprises a first aspherical objective lens 102B having an EFL of 12 mm and a second aspherical objective lens 104B having an EFL of 6 mm. The second optical arrangement 100B is configured to image an area of the object 'O' having a size (or diameter) of 24.8 mm onto a second projection plane 110B and thereby relayed onto the second image sensor 120B having a size (or diameter) of 11.4 mm. Herein, the pixel size of the second image sensor 120B is 0.56 µm and the object sampling size is very low i.e., 1.12 µm, owing to the larger EFL of the first aspherical objective lens 102B in comparison to the second aspherical objective lens 104B.

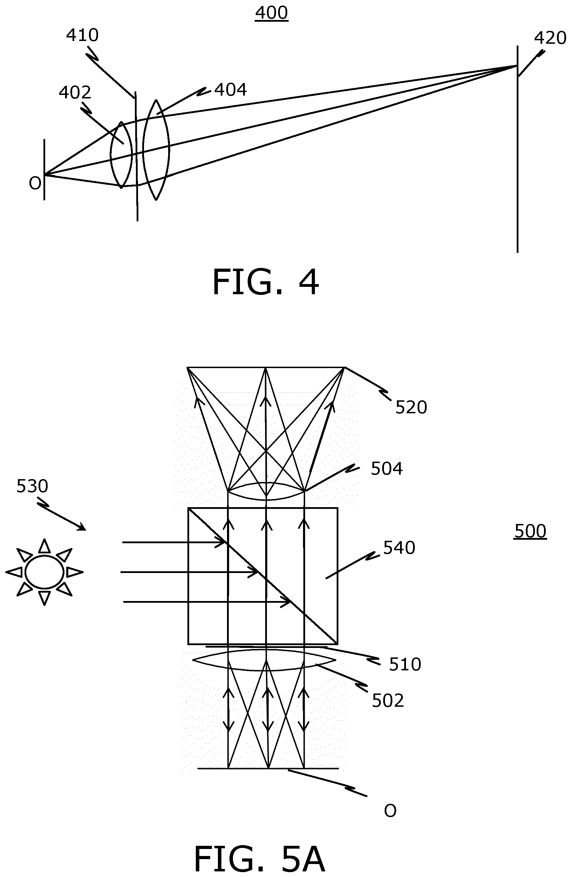

Referring to FIG. 4, illustrated is a diagrammatic illustration of an optical arrangement 400, in accordance with an embodiment of the present disclosure. It will be appreciated that FIG. 4 is read in conjunction with FIGs. 3A and 3B. Herein, the optical arrangement 400 is configured to capture a large object area in comparison to traditional optical arrangements limited to sub-millimeters object sizes. As shown, the optical arrangement 400 comprises a first aspherical objective lens 402 having an EFL of 6 mm and a second aspherical objective lens 404 having an EFL of 30 mm. The optical arrangement 400 is configured to image an area of the object 'O' having a size of 2 mm onto a projection plane 410 and thereby relayed onto an image sensor 420 having a size of 10 mm. Herein, the pixel size of the image sensor 420 is 1.00 µm and the object sampling size is high i.e., 0.2 µm, owing to the smaller EFL of the first aspherical objective lens 402 in comparison to the second aspherical objective lens 404. Beneficially, the optical arrangement 400 comprises the ability to modify the resolution and imaging area by adjusting the effective focal lengths of each of the first and second aspherical objective lenses 402 and 404. Herein, the ratio is selected between 1:5 or 5:1 and is utilized to balance resolution and captured imaging area.

Referring to FIG. 5A, illustrated is a diagrammatic illustration of an optical arrangement 500 employing an illumination system 530, in accordance with an embodiment of the present disclosure. As shown, the optical arrangement 500 comprises an illumination system 530 configured to provide light (in the directions indicated by the arrow lines in FIG. 5A) to the area of the object 'O' through at least one of Köhler illumination, critical illumination, or side illumination techniques. Typically, the illumination system 530 comprises a beamsplitter 540 for reflecting or passing the light (the light directions are indicated as arrow lines) through the first aspherical objective lens 502 to the area of the object 'O'. The beamsplitter 540 is positioned between each of the first aspherical objective lens 502 and the second aspherical objective lens 504 to arrange illumination for the object 'O' via the second aspherical objective lens 504. The light reflected back from object plane will go through the first aspherical lens 502, reflecting or passing beamsplitter 540 and second aspherical lens 504 to the image plane 520.

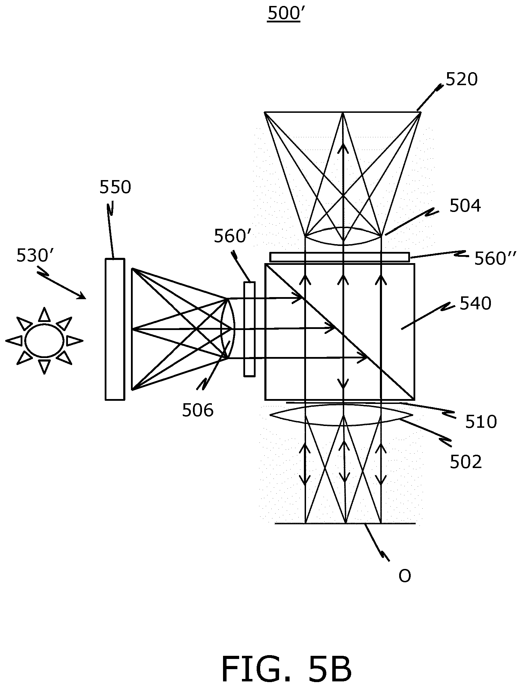

Referring to FIG. 5B, illustrated is a diagrammatic illustration of another optical arrangement 500' employing an illumination system 530', in accordance with another embodiment of the present disclosure. As shown, the optical arrangement 500' comprises an illumination system 530' configured to provide light (the light directions are indicated by arrow lines) to the area of the object 'O' through at least one of Köhler illumination, critical illumination, or side illumination techniques. The illumination system 530' comprises a beamsplitter 540 for directing light through the first aspherical objective lens 502 to the area of the object 'O'. The beamsplitter 540 is positioned between each of the first aspherical objective lens 502 and the second aspherical objective lens 504 to arrange illumination for the object 'O' via the first aspherical objective lens 502. The optical arrangement 500' further comprises a diffuser 550, on side of the illumination source (denoted as a symbol of sun), an aspherical illumination projection lens 506, a first linear polarizer 560' and a second linear polarizer 560". The aspherical illumination projection lens 506 is arranged in an optical path between the diffuser 550 and the first linear polarizer 560', and the second linear polarizer 560" is arranged in optical path between the second aspherical objective lens 504 and the beamsplitter 540, on side of the image sensor.

In this setup (FIG. 5B) the illumination is created through diffuser 550, that is projected with wide angle by using an aspherical illumination projection lens 506, through a first linear polarizer 560', and beams are reflected or passed in beamsplitter 540 to a first aspherical objective lens 502 to the object that is reflective. This polarized light is then partly reflected, absorbed, emitted, and scattered. The light will go through the first aspherical lens 502 and reflected or passed beamsplitter 540 to a second linear polarizer 560" having a opposite polarization direction, where the linearly polarized will stop, but other emitted and scattered part is no longer linearly polarized and can mostly pass the second linear polarizer 560". This light will go through a second aspherical objective lens 504 and form an image to a (image) sensor. The benefit of this optical arrangement is that it can capture image from microstructure of highly reflective materials and surfaces.

In FIG. 58, the first linear polarizer 560' is arranged between the aspherical illumination projection lens 506 and the beamsplitter 540, and the second linear polarizer 560" is arranged between the beamsplitter 540 and the second aspherical objective lens 504. Alternatively, in some embodiments, the first linear polarizer 560' may be arranged in an optical path between the diffuser 550 and the aspherical illumination projection lens 506. In addition, alternatively, in some embodiments, the second linear polarizer 560" may be arranged in an optical path between the image plane 520 and the second aspherical objective lens 504. These alternative arrangements may be advantageous in some optical applications instead of the arrangement shown in FIG. 5B.

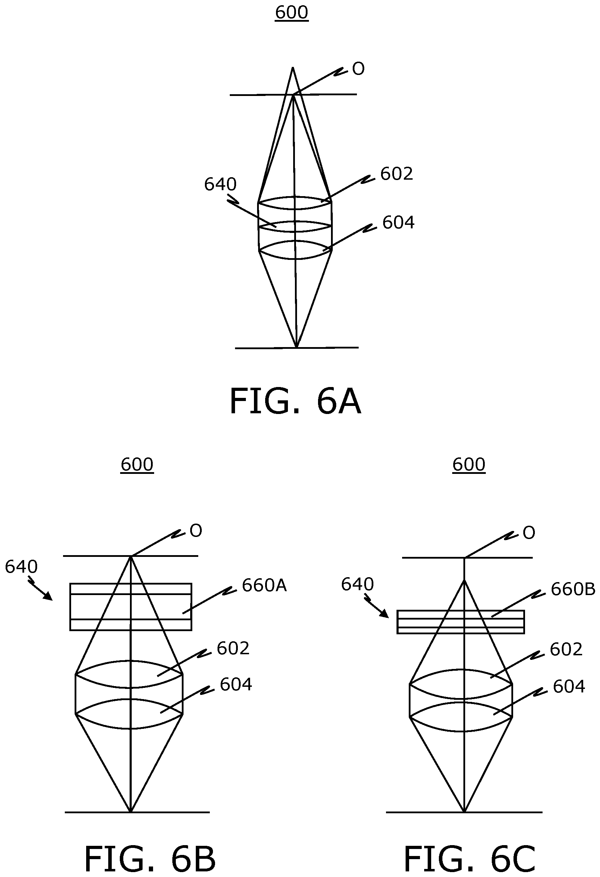

Referring to FIG. 6A, illustrated is a diagrammatic illustration of an optical arrangement 600 employing an adaptive optical element 640, in accordance with one or more embodiments of the present disclosure. The adaptive optical element 640 is positioned between the first aspherical objective lens 602 and the second aspherical objective lens 604 to correct optical aberrations for different autofocus ranges. Herein, the adaptive optical element 640 comprises a tunable element (later shown in FIGs. 6B and 6C) for adjusting the effective focal length based on imaging requirements. Typically, via dynamic adjustment of the position of the first or second aspherical objective lenses 602 or 604, the optical arrangement 600 achieves different focus ranges based on the imaging requirements. Specifically, via introduction of the adaptive optical element 640 between the first and second aspherical objective lenses 602 and 604, the optical arrangement 600 is enable to dynamically alter the optical path length to achieve different focus ranges, for example, the adaptive optical element 640 may be an optical liquid lens with varying surface shape positioned between the first and second aspherical objective lenses 602 and 604 to change the optical path length and focus range of the optical arrangement 600.

Referring to FIGs. 6B and 6C, illustrated are diagrammatic illustrations of the optical arrangement 600 of FIG. 6A depicting varying thickness optical elements 660A and 660B being employed, in accordance with one or more embodiments of the present disclosure.

As shown, in FIG. 6B, the adaptive optical element 640 comprises a first tunable element 660A having a thickness (D) and, in FIG. 6C, the adaptive optical element 640 comprises a second tunable element 660B having a modified lower thickness (d) in comparison to the first tunable element 660A to change the optical path thickness and focus of the optical arrangement 600 because of the optical path length change. This kind of element could be used also for compensating various aberrations like field curvature.

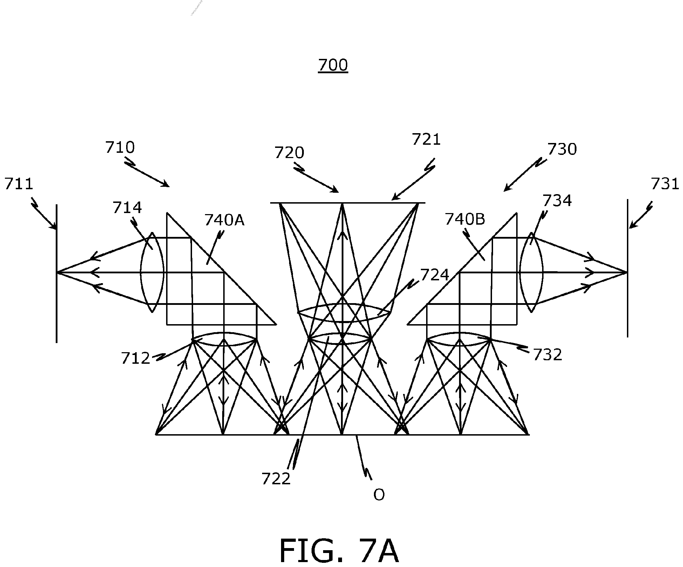

Referring to FIG. 7A, illustrated is a side view of an exemplary optical system 700 comprising three optical arrangements 710, 720, 730 in accordance with one or more embodiments of the present disclosure. As shown, the three optical arrangements 710, 720, 730 are arranged in an array to simultaneously image adjacent areas of the object 'O', and wherein each of two optical arrangements 710 and 730 arranged on sides in the array is configured with a prism folding element 740A or 740B positioned between the respective first aspherical objective lenses 712, 722, 732 and second aspherical objective lenses 714, 724, 734 to redirect light paths (light paths are indicated as arrow lines in FIG. 7A). The optical system 700 utilizes a multi-objective array 710, 720, 730 with prism folding elements 740A and 740B to capture wider field-of-view images while maintaining the physical footprint thereof.

Referring further to FIG. 7A, the optical system 700 has a first image sensor 711, configured in the optical arrangement 710, to form an image from plane of object 'O' in an object area that is adjacent to object areas of the optical arrangements 720 and 730, a second image sensor 721, configured in the optical arrangement 720, to form an image from plane of object 'O' in an object area that is adjacent to object areas of the optical arrangements 710 and 730, and a third image sensor 731, configured in the optical arrangement 730, to form an image from plane of object 'O' in an object area that is adjacent to object areas of the optical arrangements 710 and 720.

Conventionally, employing three separate microscopes arrangements leads to a collision between internal elements of the optical system 700 including at least one of a sensor side i.e., the side of the microscope where the image sensor is located, a printed wiring board (PWB), and sensor packaging i.e., housing of the image sensor. Thus, in order to overcome the aforementioned drawback, the optical system 700 of the present disclosure provides the multi-objective array 710, 720, 730 with prism folding elements 740A and 740B to allow a compact overall design and prevent collision between the internal components of the optical system 700. Specifically, the optical system 700 utilizes three (or more) optical arrangements 710, 720, 730 placed side-by-side in an array to simultaneously image adjacent areas of the object being observed without requiring additional scanning, wherein the two side optical arrangements 710 and 730 incorporate the prism folding element 740A and 740B, respectively, to redirect the light path of the incident light ray(s).

Herein, as shown in FIG. 7A, by folding or redirecting the light path via the prism folding elements 740A and 740B, the first 712, 722, 732 and the second aspherical objective lenses 714, 724, 734 of the three optical arrangements 710, 720, 730 may be positioned closer together and form an image to sensors 711, 721, 731 from plane of object 'O' in order to capture three times larger object area with small overlap for adjacent imaging systems 710, 720, 730 at object plane. The prism folding elements 740A and 740B are positioned between each of the first 712, 722, 732 and second aspherical objective lenses 714, 724, 734 in the side-mounted optical arrangements 710 and 730 of the optical system such that the light path within the first 712, 722, 732 and second aspherical objective lenses 714, 724, 734 is folded (as indicated by arrow lines in FIG. 7A), thereby allowing the two aspherical objective lenses of each of the three optical arrangements 710, 720, 730 to fit within the limited space offered via the optical system 700. Notably, each of the three optical arrangements 710, 720, 730 of the optical system 700 are precisely aligned to ensure consistent magnification and minimal distortion across the entire field-of-view.

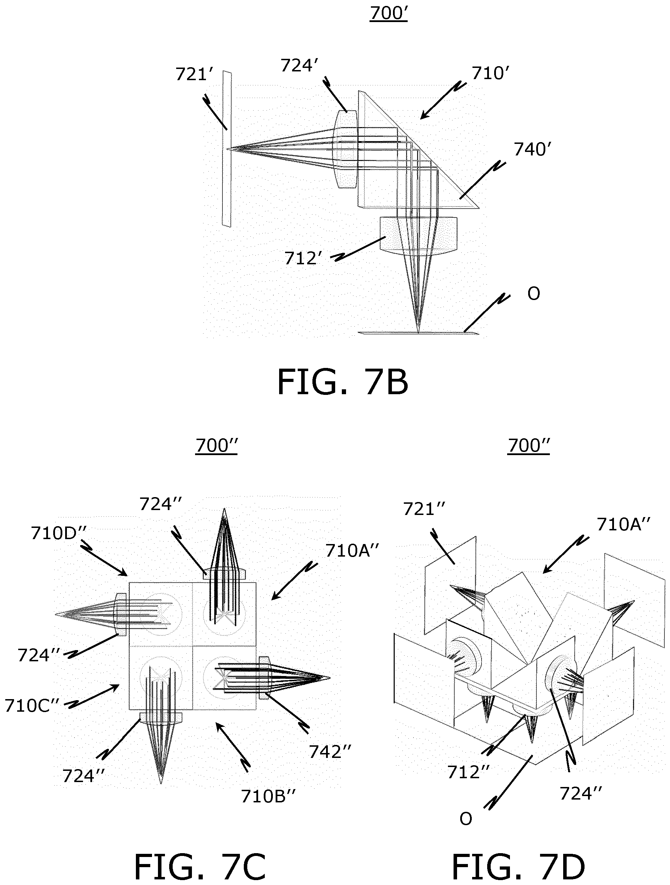

Referring to FIG. 7B, illustrated is an exemplary optical system comprising an optical arrangement of the first aspect, in accordance with one or more embodiments of the present disclosure. The optical system 700' comprises an image sensor 721'. The optical system 700' utilizes a single objective array 710' with a prism folding element 740' positioned between the respective first 712' and second aspherical objective lenses 724' to redirect light paths, to capture images of an object 'O' with the help of the image sensor 721'.

Referring to FIGs. 7C and 7D, illustrated are an exemplary optical system comprising four optical arrangements as viewed from top of the optical system, and a perspective view of the optical system illustrated in FIG. 7C. The optical system 700" comprises four optical arrangements 710A", 710B", 710C", 710D", wherein each is arranged in a 90-degree rotation in an array to simultaneously image adjacent areas of the object 'O' (the areas of the object 'O' are shown in FIG. 7D). Each of the optical arrangements 710A", 710B", 710C", 710D" is configured with a prism folding element positioned between the respective first 712" and second aspherical objective lenses 724" to redirect light paths. Each of the four optical arrangements are arranged so that all four image sensors 721" are folded in different directions (relative to each other).

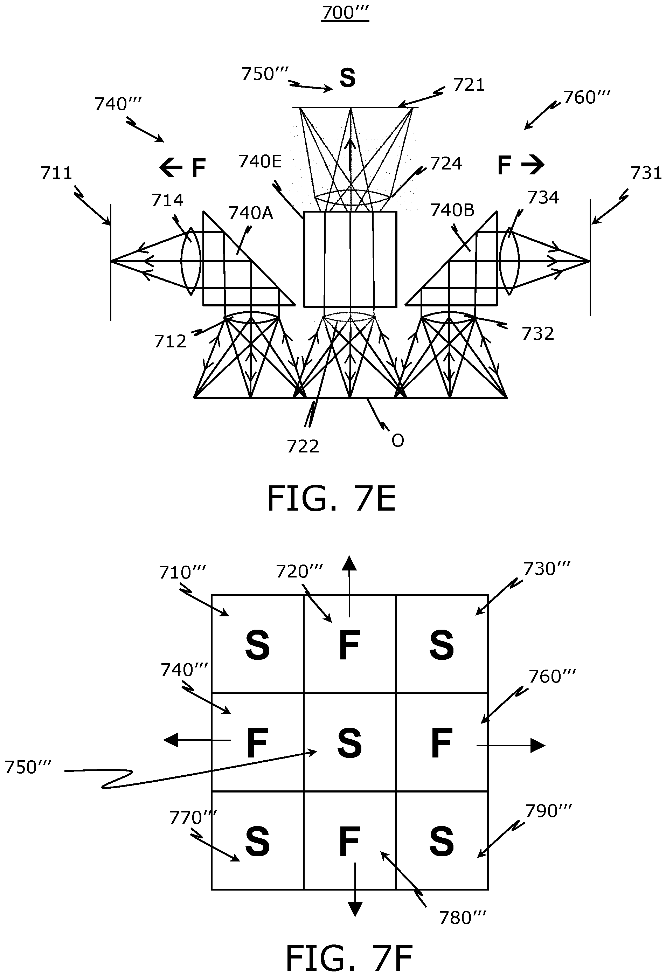

Referring to FIGs. 7E and 7F illustrated is an exemplary optical system comprising nine optical arrangements. FIG. 7E illustrates a side view of the optical system, and FIG. 7F illustrates a top view of the optical system shown in FIG. 7E. The optical system 700‴ comprises nine optical arrangements including four folded systems 720‴, 740‴, 760‴, 780‴, (see FIG. 7F) wherein each is arranged in a 90-degree rotation in an array to simultaneously image adjacent areas of the object 'O' (shown in FIG. 7F with letter F and arrow showing the folding direction outwards from center of object area center). Each of the optical arrangements 720‴, 740‴, 760‴, 780‴ is configured with a prism folding element positioned between the respective first and second aspherical objective lenses to redirect light paths (e.g., as shown in FIG. 7B). Each of the four optical arrangements 720‴, 740‴, 760‴, 780‴ are arranged so that all four image sensors (i.e., one image sensor per each optical arrangement) are folded in different directions relative to each other.

The optical system 700‴ further comprises five (structurally or mechanically) straight optical systems (or arrangements) 710"', 730‴, 750‴, 770‴, 790‴ (marked with S in FIG. 7F), arranged so that one of the straight optical systems 750‴ is at center between the optical arrangements 720‴, 740‴, 760‴, 780‴. In addition, the optical arrangements 710"', 730‴, 770‴, 790‴ are located at the corners of the image area. Each of the optical arrangements 710"', 730‴, 750‴, 770‴, 790‴ is provided with a glass cube (only 740E is shown in FIG. 7E), to elevate second aspherical objective and sensors above the folding elements 740A and 740B. Each of the optical arrangements 710‴, 730‴, 750‴, 770‴, 790‴ utilizes a single objective array with a glass cube positioned between the respective first and second aspherical objective lenses to direct light paths, and capture images of an object 'O' with the help of the image sensor.

In operation, in the straight optical system 750‴ (see FIG. 7E), light emanated from the object plane ('O') passes through the first aspherical lens 722, passing through the glass cube 740E, and then continues through the second aspherical lens 724 to the image sensor 721. In the folded system 740‴, light emanated from the object plane first passes through the first aspherical lens 712, and continues through the prism folding element 740A, whereby the light is reflected as it passes through the prism folding element, and then further continues through the second aspherical lens 714 to the image sensor 711. In addition, in the folded system 760‴, light emanated from the object plane first passes through the first aspherical lens 732, and then continues through the prism folding element 740B, whereby the light is reflected as it passes through the prism folding element, and then further continues through the second aspherical lens 734 to the image sensor 731.

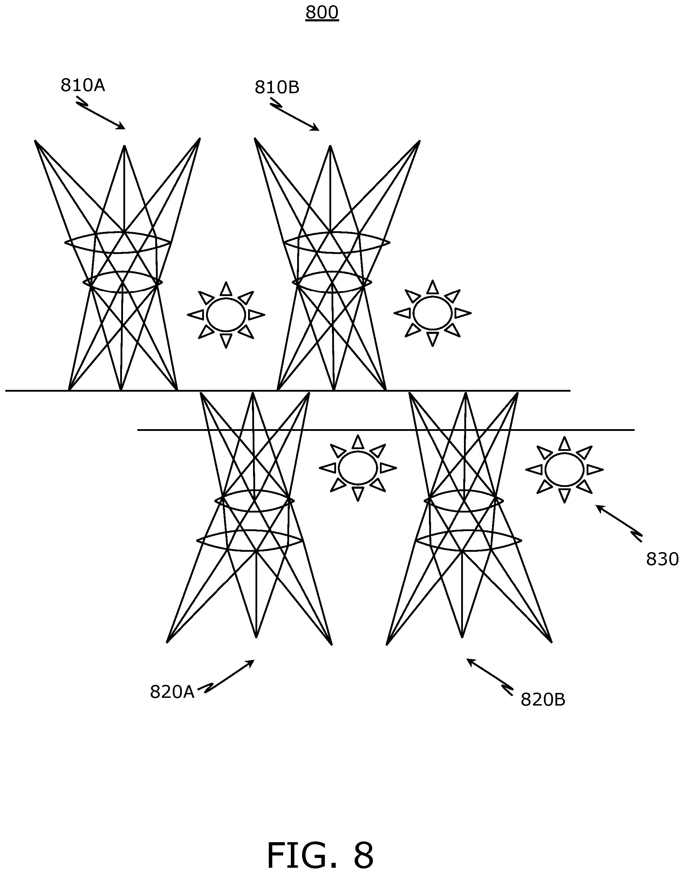

Referring to FIG. 8, illustrated is a dual-sided optical system 800 employing a plurality of optical arrangements for imaging both sides of the object 'O', in accordance with an embodiment of the present disclosure. Herein, illumination system 830, or light sources thereof, are positioned along each of the plurality of optical arrangements for ensuring sufficient illumination of the object 'O' during observation. As shown, the optical system 800 comprises the plurality of optical arrangements (similar to the optical arrangement of FIG. 1), wherein the plurality of optical arrangements comprises a first set of optical arrangements 810A and 810B configured to capture image segments of a first side of the object "O". Moreover, the plurality of optical arrangements further comprises a second set of optical arrangements 820A and 820B configured to capture image segments of a second side of the object 'O', wherein the object 'O' is placed in a transparent slide (not shown) to enable imaging of areas thereof from the first side as well as the second side, and wherein each of the first set 810A and 810B and the second set of optical arrangements 820A and 820B is configured to image an entire width of the object 'O' in the corresponding image segments from respective one of the first side and the second side. Typically, the small size of the plurality of optical arrangements employed via the optical system 800 enables integration of each of the first set of optical arrangements 810A and 810B on the first side of the object 'O' and each of the second set of optical arrangements 820A and 820B on the second side of the object 'O', in order to enable high resolution image capturing of the object placed on the transparent slide, without the need for scanning. Optionally, the optical system 800 further comprises a processor configured to stitch, and optionally overlay, the segmented images to form a complete image of the object 'O'.

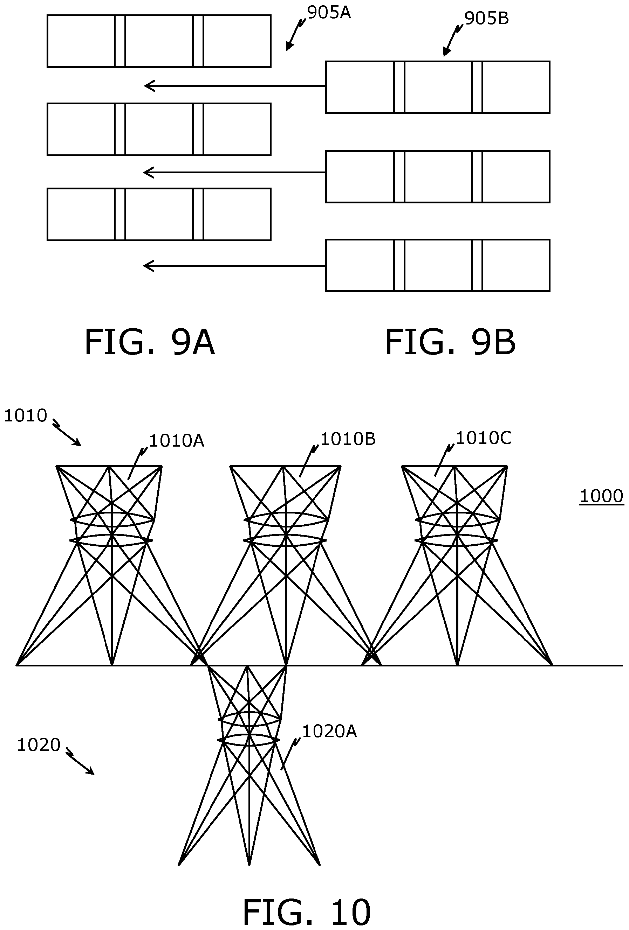

Referring to FIGs. 9A and 9B, illustrated are exemplary depictions of image segments captured from an upper side and a lower side, respectively, of the object 'O', in accordance with one or more embodiments of the present disclosure. It will be appreciated that FIG. 9 is to be read in conjunction with FIGs. 7A-F and 8. Herein, both sides i.e., upper side and lower side of the object placed on the transparent slide is captured. Conventionally, traditional microscopy solutions may require scanning to capture a whole microscope slide with high resolution, potentially missing features obscured from one side. Thus, in order to overcome the aforementioned drawback, the optical system of the present disclosure is configured to capture image segments from both sides of the object and thereby combined (or stitched) together to form a singular complete image of the object 'O'. In FIG. 9A, image segments 905A of the object 'O' are captured from an upper side; whereas, in FIG. 9B, image segments 905B of the object 'O' are captured from a lower side. The width of each of the slides may be varied based on the imaging requirements and may have dimensions of 3 mm x 9 mm with an object side sampling resolution of 0.56 µm. Typically, each of the three image segments (see FIGs. 9A and 9B) (captured by distinct optical arrangements) on either side of the object 'O' are placed sequentially on both sides and correspondingly, each of the three image segments on either side of the object 'O' is combined via stitching to enable capturing of the entire area of the object 'O' on both sides without the need for scanning.

Optionally, the optical system further comprises a processor configured to receive the captured image segments of the first side of the object 'O' at the first resolution, from the first set of optical arrangements, identify one or more regions of interests in the captured image segments of the first side of the object, and configure the single optical arrangement in the second set of optical arrangements to capture images of the one or more regions of interests from the second side of the object 'O' at the second resolution.

Referring to FIG. 10, illustrated is a diagrammatic illustration of an optical system 1000 comprising a plurality of optical arrangements, in accordance with one or more embodiments of the present disclosure. As shown, the plurality of optical arrangements comprises a first set of optical arrangements 1010 comprising two or more optical arrangements 1010A, 1010B, 1010C, configured to capture image segments of a first side of the object 'O'. The plurality of optical arrangements further comprises a second set of optical arrangements 1020 comprising a single optical arrangement 1020A, configured to capture an image of a second side of the object 'O'. Herein, the object 'O' is placed in a transparent slide to enable imaging of areas thereof from the first side as well as the second side, wherein the two or more optical arrangements 1010A, 1010B, 1010C in the first set of optical arrangements 1010 are configured to capture the image segments of the first side of the object 'O' at a first resolution, and the single optical arrangement 1020A in the second set of optical arrangements 1020 is configured to capture the image segment of the second side of the object 'O' at a second resolution, and wherein the second resolution is higher than the first resolution. Beneficially, by employing two or more optical arrangements 1010A, 1010B, 1010C in the first set of optical arrangements 1010, the optical system 1000 achieves a higher resolution for accurately capturing fine details of the first side of the object 'O'. In contrast, by employing a single optical arrangement 1020A in the second set of optical arrangements 1020, the optical system 1000 enables capturing of the complete image on the second side of the object 'O' to offer context for the high-resolution details captured via the first set of optical arrangements 1010 of the plurality of optical arrangements within the optical system 1000.

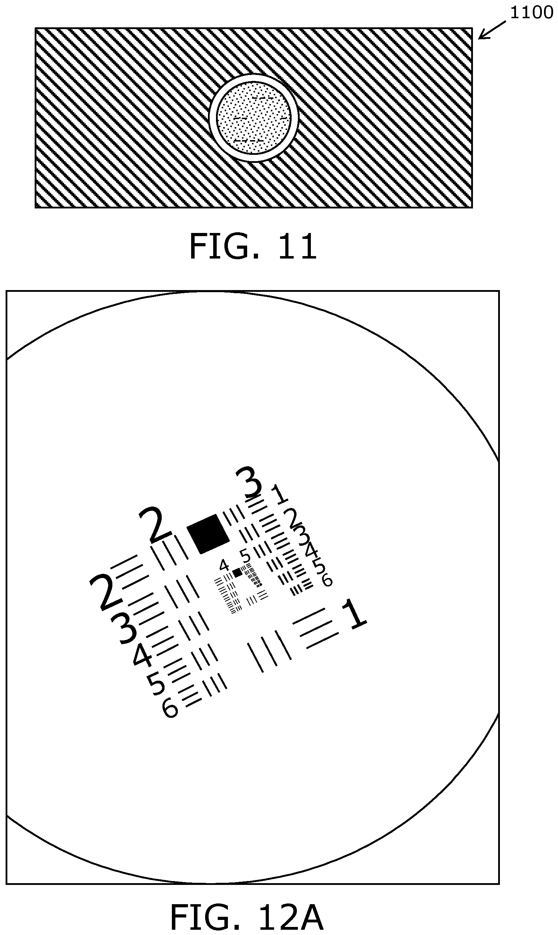

Referring to FIG. 11, illustrated is an exemplary depiction of an optical arrangement 1100, in accordance with an embodiment of the present disclosure. As shown, the optical arrangement 1100 (similar to optical arrangement 100 of FIG. 1) comprises a length (or size) in a range of 60 mm to 70 mm and employed to capture microscopic images from microscopic slides such as, for diagnostic purposes.

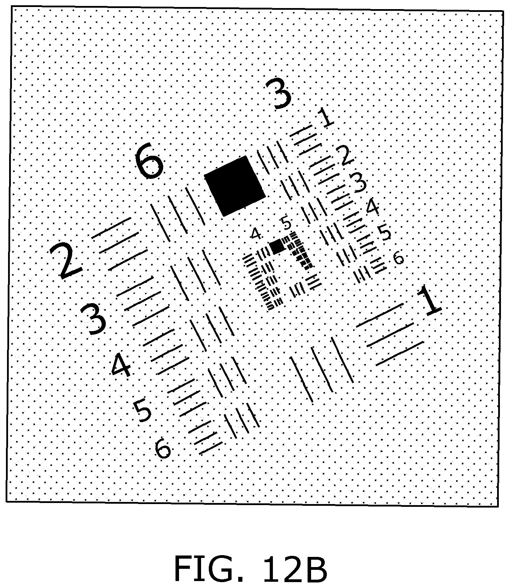

Referring to FIG. 12A and 12B, illustrated are exemplary depictions of an original image and a magnified image, respectively, of a large area of the object 'O' captured via the optical arrangement 1100 of FIG. 11, in accordance with one or more embodiments of the present disclosure. Herein, the effective focal length of the first aspherical objective lens (e.g., the first aspherical objective lens 102 in FIG. 1) is 6.2 mm and the EFL of the second aspherical objective lens (e.g., the second aspherical objective lens 104 in FIG. 1) is 6.5 mm i.e., ratio of the effective focal lengths of the first and the second aspherical objective lenses is 1 (approximately). Further, the pixel size of the image sensor (e.g., the image sensor 120 in FIG. 1) and/or object sampling resolution is 1.4 µm. As shown, in FIG. 12A, the original object (or non-magnified) is examined via the optical arrangement 1100 and thereby displayed as a magnified image in FIG. 12B. Furthermore, the image area of the object captured via the optical arrangement 1100 is equal to 8136 pixels (width) x 6128 pixels (height) that translates to a captured area of approximately 11390 µm x 8579 µm i.e., approximately one square centimeter. Overall, FIGs. 12A and 12B demonstrate the effectiveness of the optical arrangement 1100 in capturing large object areas.

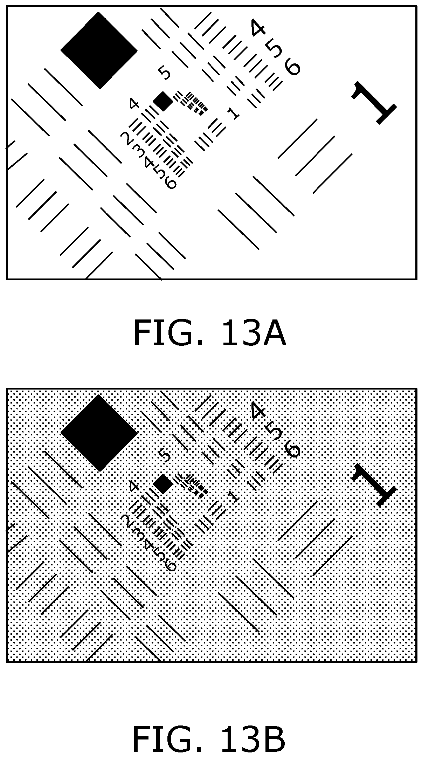

Referring to FIG. 13A and 13B, illustrated are exemplary depictions of an original image and a magnified image, respectively, of a small area of the object 'O' captured via the optical arrangement 1100 of FIG. 11, in accordance with one or more embodiments of the present disclosure. Herein, the effective focal length of the first aspherical objective lens (e.g., the first aspherical objective lens 102 in FIG. 1) is 3.2mm and the EFL of the second aspherical objective lens (e.g., the second aspherical objective lens 104 in FIG. 1) is 6.5mm i.e., ratio of the effective focal lengths of the first and the second aspherical objective lenses is 0.5 (approximately). Further, the pixel size of the image sensor (e.g., the image sensor 120 in FIG. 1) and/or object sampling resolution is 0.7 µm. As shown, in FIG. 13A, the original object (or non-magnified) is examined via the optical arrangement 1100 and thereby displayed as a magnified image in FIG. 13B achieves a significantly higher theoretical sampling resolution (0.7 µm) compared to Test Case A (1.4 µm). Furthermore, the image area of the object captured via the optical arrangement 1100 is equal to 5695 µm x 4290 µm i.e., significantly lower than the area captured in FIG. 12B. Overall, FIGs. 13A and 13B illustrates the versatility of the optical arrangement 1100, wherein via dynamic adjustment of the configuration of the first and/or second aspherical objective lenses, a higher image resolution for capturing finer details on smaller object areas is achieved.

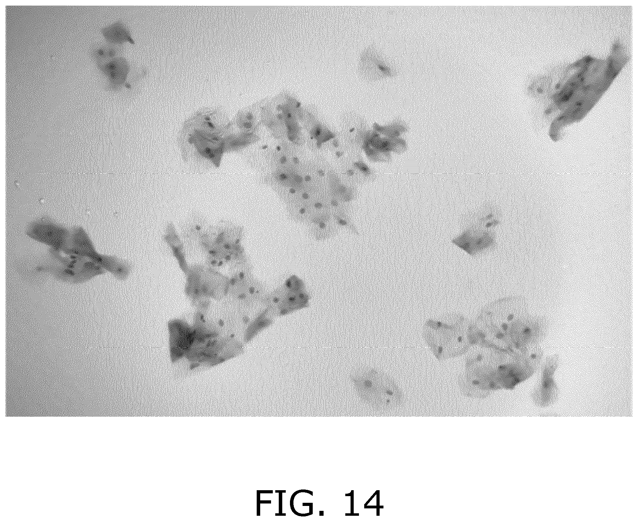

Referring to FIG. 14, illustrated is an exemplary illustration of the optical arrangement 1100 of FIG. 11 being employed for cervical cancer screening, in accordance with an embodiment of the present disclosure. Herein, the effective focal length of the first aspherical objective lens (e.g., the first aspherical objective lens 102 in FIG. 1) is 3.2mm and the EFL of the second aspherical objective lens (e.g., the second aspherical objective lens 104 in FIG. 1) is 10 mm i.e., ratio of the effective focal lengths of the first and the second aspherical objective lenses is 0.32 (approximately). Further, the pixel size of the image sensor (e.g., the image sensor 120 in FIG. 1) and/or object sampling resolution is 0.9 µm. As shown, the original object (or specimen) is examined via the optical arrangement 1100 and thereby displayed as a magnified image in FIG. 14 to enable examination of individual cells or small groups of cells during cervical cancer screening procedures. Furthermore, the image area of the object captured via the optical arrangement 1100 is equal to 4000 pixels (width) x 3000 pixels (height) i.e., 1200 µm x 900 µm. Overall, the optical arrangement 1100 prioritizes high resolution for capturing critical details in cervical cancer screening owing to the short EFL in the first aspherical objective lens providing exceptional theoretical sampling resolution of approximately 0.3 µm, allowing visualization of fine cellular structures. Moreover, the longer EFL of the second aspherical objective lens increases magnification while maintaining an acceptable field of view for capturing relevant cell features via the optical arrangement 1100.

## Claims

1. An optical arrangement (100, 100A, 100B, 400, 500, 500', 600, 710, 720, 730, 740‴, 750‴, 760‴, 810A, 810B, 820A, 820B, 1010A, 1010B, 1010C, 1020A) for a microscope, the optical arrangement comprising:
a first aspherical objective lens (102) configured to project an area of an object onto a projection plane (110), comprising:
- an effective focal length (EFL) within a range of 0.5 millimeter (mm) to 50.0 mm, and
- an effective focal length (EFL) to object diagonal ratio in a range of 5 to 0.4; and
a second aspherical objective lens (104) configured to transfer the projected area of the object from the projection plane to an image sensor (120), comprising:
- an effective focal length (EFL) within a range of 0.5 mm to 50.0 mm, and
- an effective focal length (EFL) to sensor diagonal ratio within a range of 5 to 0.4,
wherein an EFL ratio of the first aspherical objective lens with respect to the second aspherical objective lens is within a range of 0.1 to 10.

2. An optical arrangement (100, 100A, 100B, 400, 500, 500', 600, 710, 720, 730, 740‴, 750‴, 760‴, 810A, 810B, 820A, 820B, 1010A, 1010B, 1010C, 1020A) of claim 1 further comprising an autofocus mechanism configured to adjust a focus of the optical arrangement, having an autofocus range, based on a position of the area of the object (O) relative to the image sensor (120).

3. An optical arrangement (100, 100A, 100B, 400, 500, 500', 600, 710, 720, 730, 740‴, 750‴, 760‴, 810A, 810B, 820A, 820B, 1010A, 1010B, 1010C, 1020A) of claim 2, wherein the autofocus mechanism comprises a voice coil motor for moving at least one of the first aspherical objective lens (102) and the second aspherical objective lens (104), for focusing adjustments.

4. An optical arrangement (100, 100A, 100B, 400, 500, 500', 600, 710, 720, 730, 740‴, 750‴, 760‴, 810A, 810B, 820A, 820B, 1100) of claim 2, wherein the autofocus mechanism comprises an optical element (660A, 660B) with variable optical path thickness element positioned between the first aspherical objective lens (102) and object (100) and/or between the second aspherical objective lens (104) and sensor (110), for focusing adjustments.

5. An optical arrangement (100, 100A, 100B, 400, 500, 500', 600, 710, 720, 730, 740‴, 750‴, 760‴, 810A, 810B, 820A, 820B, 1010A, 1010B, 1010C, 1020A) of any one of preceding claims, wherein the first aspherical objective lens (102) is configured to collimate light from the area of the object (O).

6. An optical arrangement (100, 100A, 100B, 400, 500, 500', 600, 710, 720, 730, 740‴, 750‴, 760‴, 810A, 810B, 820A, 820B, 1010A, 1010B, 1010C, 1020A) of any one of preceding claims, wherein the second aspherical objective lens (104) is configured to focus collimated light onto the image sensor (120).

7. An optical arrangement (100, 100A, 100B, 400, 500, 500', 600, 710, 720, 730, 740‴, 750‴, 760‴, 810A, 810B, 820A, 820B, 1010A, 1010B, 1010C, 1020A) of any one of preceding claims further comprising an adaptive optical element (640) positioned between the first aspherical objective lens (102) and the second aspherical objective lens (104) for focusing different autofocus distances, wherein the adaptive optical element (640) comprises a tunable element for adjusting a focal length based on imaging requirements.

8. An optical arrangement (100, 100A, 100B, 400, 500, 500', 600, 710, 720, 730, 740‴, 750‴, 760‴, 810A, 810B, 820A, 820B, 1010A, 1010B, 1010C, 1020A) of any one of preceding claims further comprising an illumination system (530, 530', 830) configured to provide light to the area of the object (O) through at least one of Köhler illumination, critical illumination, or side illumination techniques.

9. An optical arrangement (100, 100A, 100B, 400, 500, 500', 600, 710, 720, 730, 740‴, 750‴, 760‴, 810A, 810B, 820A, 820B, 1010A, 1010B, 1010C, 1020A) of claim 8, wherein the illumination system comprises a beamsplitter (540) for directing light through the first aspherical objective lens (102) to the area of the object (O).

10. An optical system (700, 700', 700", 700‴) comprising at least three optical arrangements (710, 710', 710A", 710B", 710C", 710D", 720, 730) of any one of claims 1-9, wherein the at least three optical arrangements are arranged in an array to simultaneously image adjacent areas of the object (O), and wherein each of two optical arrangements (710, 710', 710A", 710B", 710C", 710D", 730) arranged on sides in the array is configured with a prism folding element (740A, 740B 740') positioned between the respective first (712, 712', 712", 722, 732) and second aspherical objective lenses (714, 724, 724", 734) to redirect light paths to image sensors (711,721, 721', 721", 731).

11. An optical system (700, 700', 700", 700‴) of claim 10, wherein the optical arrangement (720) having the two optical arrangements (710, 730) arranged on sides in the array is provided with a beamsplitter (740E) positioned between the respective first (722) and second aspherical objective lenses (724) to redirect light paths to image sensors (721).

12. An optical system (700, 700', 700", 700‴) comprising at least four optical arrangements of any one of claims 1-9, wherein each of the at least four optical arrangements is arranged in a 90-degree rotation in an array to simultaneously image adjacent areas of the object, and wherein each of the at least four optical arrangements (710A", 710B", 710C", 710D") is configured with a prism folding element positioned between the respective first (712") and second aspherical objective lenses (724") to redirect light paths to image sensors (721")

13. An optical system (800) comprising a plurality of optical arrangements of any one of claims 1-9, wherein the plurality of optical arrangements comprises:
a first set of optical arrangements (810A, 810B) configured to capture image segments of a first side of the object (O); and
a second set of optical arrangements (820A, 820B) configured to capture image segments of a second side of the object,
the object being placed in a transparent slide to enable imaging of areas thereof from the first side as well as the second side,
wherein each of the first set and the second set of optical arrangements is configured to image an entire width of the object in the corresponding image segments from respective one of the first side and the second side.

14. An optical system (1000) comprising a plurality of optical arrangements of any one of claims 1-9, wherein the plurality of optical arrangements comprises:
a first set of optical arrangements (1010) comprising two or more optical arrangements (1010A, 1010B, 1010C) and configured to capture image segments of a first side of the object (O); and
a second set of optical arrangements (1020) comprising a single optical arrangement (1020A) and configured to capture an image of a second side of the object,
the object being placed in a transparent slide to enable imaging of areas thereof from the first side as well as the second side,
wherein the two or more optical arrangements in the first set of optical arrangements are configured to capture the image segments of the first side of the object at a first resolution, and the single optical arrangement in the second set of optical arrangements is configured to capture the image segment of the second side of the object at a second resolution, and wherein the second resolution is higher than the first resolution.

15. An optical system (1000) of claim 14 further comprising a processor (902) configured to:
receive the captured image segments of the first side of the object (O) at the first resolution, from the first set of optical arrangements (1010);
identify one or more regions of interests in the captured image segments of the first side of the object; and
configure the single optical arrangement (1020A) in the second set of optical arrangements (1020) to capture images of the one or more regions of interests from the second side of the object at the second resolution.
